# EUROPEAN PATENT SPECIFICATION

(11) **EP 1 492 255 B1**
(45) Date of publication and mention of the grant of the patent: **16.05.2007**
(21) Application number: 04253780.3
(22) Date of filing: 24.06.2004
(51) Int. Cl.: H04B 10/08

(54) **Optical wavelength monitoring system**
Optisches Wellenlängenmonitorsystem
Système de surveillance de longueur d'onde

(30) Priority: 25.06.2003 US 482572
(43) Date of publication of application: 29.12.2004
(73) Proprietor: Tyco Telecommunications (US) Inc., Morristown, NJ 07960 (US)
(72) Inventor: Zhang, Hongbin, Marlboro, NJ 07746 (US); Jander, R. Brian, Freehold, NJ 07728 (US)
(74) Representative: Weitzel, David Stanley

(56) References cited:
- US-A- 4 856 899
- US-A- 5 838 437
- US-A1- 2002 163 646
- US-B1- 6 441 933
- US-B2- 6 552 785

## Description

### BACKGROUND OF THE INVENTION

(Cancelled)

Aspects of the present invention relates to optical telecommunication systems and particularly to a wavelength monitoring and control system and method for achieving performance optimization of an optical transmission system.

When the useable transmission bandwidth of a multi-wavelength, *i.e.*, multi-terabit/s wavelength division multiplexed (WDM), transmission system is filled, traffic must be diverted to another system or the existing system must be upgraded to accommodate higher rates of data transmission.

One possible upgrade approach involves increasing the spectral efficiency (*i.e.*, reducing the WDM channel spacing). In this case, for systems with very narrow channel spacing, for example, less than 35 GHz or so, the signal frequency must be carefully determined within a small range around a fixed frequency grid to mitigate interchannel cross talk between neighboring channels. The frequency control grid might be an absolute grid, *i.e.*, based on International Telecommunication Union (ITU) standards, or a relative grid determined, for example, by one or more interleaving filters or single channel filters.

Performance-based frequency adjustment algorithms are generally not satisfactory for positioning narrowly spaced channels. Currently available 10 Gb/s transponder systems derive the line transmitter optical channel from, for example, an externally modulated continuous wave distributed feedback (CW DFB) laser diode source. To reduce sparing costs associated with transponder circuit packs, the line transmitter of this known system has been designed such that several codes cover the C-band, each code being tunable over 200 GHz. Each transponder is selectable to a given 50 GHz ITU channel or utilizes a provisioning offset value, to any location within the specific 200 GHz tuning range.

Unlike certain commercially available transponders, in this particular set-up, a wavelength locker frequency control method is not designed into each line transmitter. Instead, during manufacture, each transmitter laser is calibrated over its individual tuning range and operating temperature range, allowing the laser to be provisioned within +/- 20 pm of any desired operating point.

To accommodate the need for system performance optimization during commissioning and to accommodate long-term aging effects of land-based system equipment and undersea system equipment (*i.e.*, dry and wet plants), an adjustment algorithm based on far end channel Q performance is at times implemented to slowly and periodically fine-tune the operating DFB laser frequency. This adjustment algorithm approach, based on actual channel performance with slow frequency dithering, substantially obviated the design need for a wavelength locker.

This adjustment algorithm approach has proven somewhat successful for optimally controlling channel frequency as long as channels spacing are greater than about 40 or 50 GHz. However, practical experiments reveal that this approach may negatively affect overall performance if allowed to operate at narrower channel spacing.

In a transmission experiment performed on a transatlantic segment, it was determined that a 1 dB performance penalty resulted when one of two near neighbor 25 GHz channels was tuned toward the other measured channel by about 15 pm. In this case, the channel frequency detuning corresponded to about 7.5% of the channel spacing.

Thus, to obtain precise control and relative location of signals to each other and to noise, rejection filters may be required as channel spacing is decreased below about 50 GHz. Indeed, for current systems, especially those expected to reach full capacity at about 33 GHz channel spacing, a precision wavelength measure and control system is desired.

Such system should preferably measure and locate WDM signals with high relative or absolute accuracy. It would be desirable to have a system that employs a precision wavelength monitor and may require either a precision reference or special terminal architecture to establish an operating grid for the channel frequencies.

Optical channel monitor technology for WDM or dense WDM (DWDM) signals and networks are commercially available and may be classified into several groups. These include: 1) high-end optical spectrum analyzers (OSAs) based on scanning filters, *e.g.*, tunable diffraction grating filters or tunable Fabry-Perot filters; 2) optical channel performance monitors based on optical wavelength splitters with diode array; and 3) precision wavelength meters based on the Michelson interferometer. It is desirable to have a precision aggregate-channel wavelength monitor.

US 4856899 discloses an optical frequency analyser utilising a local oscillator comprising an optical frequency synthesiser or a tunable laser.

For aggregated return-to-zero (RZ) and chirped RZ (CRZ) input signals, it is desirable to have high differential accuracy for locating signals as well as reasonably high absolute accuracy for positional measurement reporting.

Additionally, there is a desire to deploy equipment that does not require periodic re-calibration and can operate substantially continuously over the life of an optical telecommunication system. Given the performance penalties that arise from improperly positioned channel frequencies, both differential accuracy and the absolute accuracy should be less than +/- 3 pm to have less than 0.1 dB penalty when implementing 25 GHz channel spacing. The specified wavelength accuracy should be insensitive to the ambient temperature between 10 °C and 65 °C, the atmospheric pressure and the humidity.

Current commercial products and technologies do not easily meet these requirements. Both OSA techniques and optical channel performance monitors do not have sufficient differential and absolute accuracy. For example, Ando's latest OSA model AQ6319 has about 10 pm wavelength accuracy; and BaySpec's IntelliGuard^{™} optical channel monitor has 15 pm wavelength accuracy.

In the case of a Michelson interferometer wavelength meter, sub-pm absolute accuracy is possible using a 633 nm Helium-Neon reference laser and stringent control of refractive index ratio between 633 nm and 1550 nm. However, the length of the Helium-Neon laser resonator and the refractive index ratio varies with temperature. So it would seem that the wavelength meter is suitable for lab conditions rather than long-term field deployment. For example, Ando's AQ6141 wavelength meter meets its stated specifications only when operating between 10 ° C and 30 °C. This narrow range does not exist in most, if not all, deployed systems.

### SUMMARY OF THE INVENTION

[0016a] Accordingly a first aspect of the present invention provides a system for detecting a wavelength of an input optical signal, said system comprising: a local oscillator for providing optical local oscillator signal on first and second paths, a wavelength calibration device coupled to said first path for producing real-time clock pulses corresponding to a wavelength of said local oscillator signal, an optical signal coupler for combining said local oscillator signal on said second path with the input optical signal to provide a combined signal; and a detection circuit for receiving at least a portion of said combined signal and detecting the input optical signal using said clock pulses for data acquisition.

Preferably the local oscillator comprises a real-time externally calibrated tunable laser. Preferably, the tunable laser sweeps over substantially the entire wavelength range (C- band) and the beating signal is detected by a narrow bandwidth electrical receiver.

More preferably, the detection of the beating signal indicates that an input signal lies within a small region around the tunable laser.

(Cancelled)

Preferably, the second portion combines a periodic wavelength reference with a hydrogen cyanide (HCN) gas reference cell. More preferably, the periodic wavelength reference produces a sequence of wavelength calibrated timing pulses. Most preferably, each pulse corresponds to between about 0.4 pm and 50 pm wavelength increments.

In accordance with another aspect of the present invention, there is provided a method for detecting a wavelength of an input optical signal in an optical communication system, comprising: providing a local oscillator signal, on first and second optical paths; coupling the local oscillator signal from the first path into a wavelength calibration device coupled for producing real-time clock pulses corresponding to a wavelength of said local oscillator signal; coupling the local oscillator signal from the second path into an optical signal coupler for combining said local oscillator signal on said second path with the input optical signal to provide a combined optical signal; and detecting the input optical signal from said combined optical signal using said clock pulses for data acquisition.

Preferably, the clock edges correspond to equally spaced optical frequency intervals used to trigger data acquisition in a detection circuit. Additionally, the local oscillator is mixed in a 3 dB optical coupler with an aggregate channel signal to be measured. More preferably, if the local oscillator is tuned to a frequency such that the heterodyne beat tones between the local oscillator and the input signal is within the detector bandwidth, the optical spectrum of the input signal is translated to an IF frequency determined by the heterodyne beat tones. Yet more preferably, there is provided a balanced detector coupled to the 3 dB optical coupler to cancel the intensity modulation of the input signal.

Most preferably, there is provided a low pass filter coupled between the 3 dB coupler and the balanced detector. Preferably, the polarization scrambler reduces DOP below about 10% for a 200 KHz bandwidth. Most preferably, there is provided an A/D converter coupled to the output of the periodic wavelength reference and the balanced detector.

### BRIEF DESCRIPTION OF THE DRAWINGS

For the purpose of illustrating aspects of the invention, the following drawings are presented, it being understood, however, that the aspects of the invention highlighted are not limited to the precise arrangements and instrumentalities shown, wherein:

Fig.1 is a system architecture diagram of a wavelength monitor device based on polarization-diverse heterodyne detection with a tunable laser in accordance with one embodiment of the present invention;

Figs. 2A-2D are graphical representation of optical spectrum of RZ signals without interfering tone at different spacing in accordance with one embodiment of the present invention;

Fig. 3 is a plot diagram of a line-width measurement of the RZ signal with 125 MHz electrical bandwidth;

Fig. 4 is a graph of differential accuracy of RZ signals without interfering tone at different spacing; and

Fig. 5 is a graph of absolute accuracy of RZ signals without interfering tone at different spacing.

### DETAILED DESCRIPTION

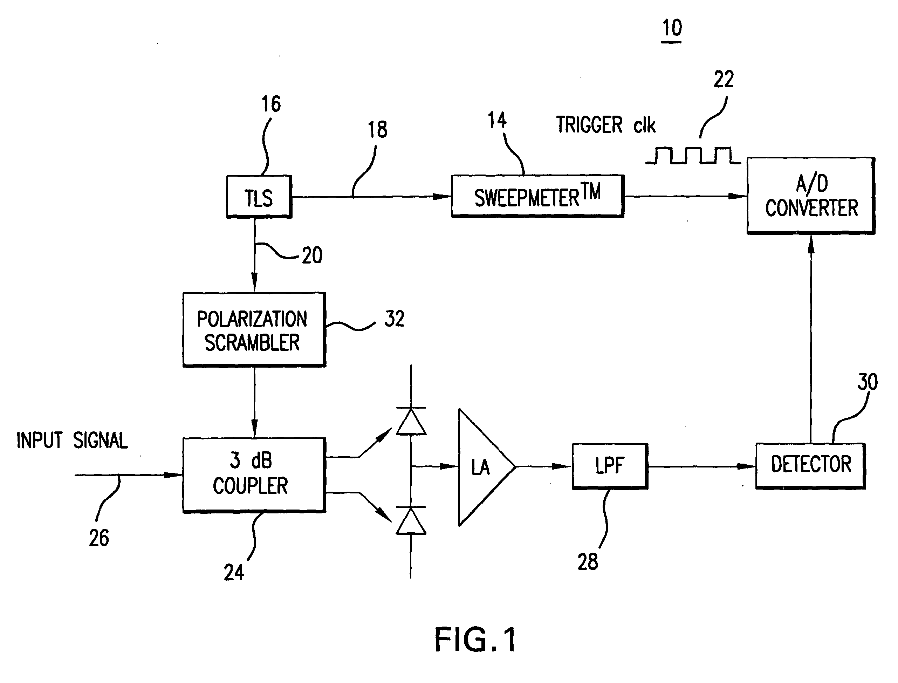

Referring now to the drawings wherein like numerals indicate like elements, there is provided a system architecture 10 as shown in Fig. 1. It is preferably composed of two subsystems: the optical heterodyne setup using an external cavity tunable laser source (TLS) 16 as a local oscillator (LO) and the Sweepmeter^{™} 14 for wavelength calibration of the LO; and a detection subsystem.

Most tunable lasers scan linearly with absolute wavelength accuracy of only about 10 to 50 pm. More preferably, to achieve relatively higher accuracy, a Sweepmeter^{™} developed by Precision Photonics Corp. for real-time wavelength calibration is used.

The Sweepmeter^{™} works by combining a periodic wavelength reference with a hydrogen cyanide (HCN) gas reference cell. The periodic wavelength reference produces a sequence of a digital clock, and one clock tick corresponds to about 0.4 pm wavelength increments. The clock tick can range from about 0.4 pm to about 50 pm. The HCN absorption spectrum, which is insensitive to ambient temperature (only about 0.01 pm/°C temperature dependence), humidity and air pressure (not detectable), has about 0.5 pm absolute accuracy.

As shown in Fig. 1, light from the tunable laser source (TLS) 16 entering the Sweepmeter^{™} 14 via path 18 is divided into two paths (not shown). A first optical path couples light into a periodic wavelength reference; a second optical path couples light into an NIST-traceable HCN gas reference cell, both contained within the Sweepmeter^{™}.

The periodic wavelength reference produces a real-time clock pulse 22. The clock pulse 22 edges correspond to equally space optical frequency intervals that are used to trigger data acquisition in the detection circuit. As the TLS 16 sweeps, two calibration numbers are provided from the Sweepmeter^{™} 14: 1) the optical frequency corresponding to the first output clock trigger, and 2) the optical frequency step size between clock outputs. The optical frequency axis of the measurement can thus be constructed with an accuracy of < 1 pm rms, a resolution up to 0.4 pm (50 MHz), and a scan-to-scan repeatability of < 0.2 pm rms. By calibrating the TLS 16 with the above method, a tunable LO with 0.4 pm optical frequency steps is produced. As discussed above, these steps can be as much as between 0.4 pm and 50 pm.

As shown in Fig. 1, the TLS is mixed via path 20 in a typical 3 dB optical coupler 24 with an aggregate channel signal to be measured. If the TLS (LO) is tuned to a frequency such that the heterodyne beat tones between the TLS (LO) and the input signal 26 is within the detector bandwidth (determined by the LPF 28), the optical spectrum of the input signal 26 is translated to an IF frequency determined by the heterodyne beating tone.

In addition to the IF heterodyne beating tone, the intensity modulation of the input signal 26 and the shot noise also fall into the IF bandwidth, and is treated as intensity noise.

In a preferred embodiment of an aspect of the invention, an optimum performance is achieved by using a balanced detector 30 to cancel the intensity modulation of the input signal 26. In this case, the dominant noise is the shot noise from the local oscillator (LO). By further reducing the detector bandwidth, the SNR can also be improved. However, the smallest electrical bandwidth may be limited by half of the optical frequency step so that the beating signal is present in at least one data acquisition clock.

To minimize the polarization sensitivity of the technique, a scheme for depolarizing TLS (LO) 16 using a polarization scrambler 32 is preferably used. This scrambler 32 is able to reduce DOP below 10% for a 200 KHz bandwidth, which is quite adequate for removing the unwanted effects associated with the polarization mismatch between the TLS 16 and the randomly polarized aggregate channel test signal.

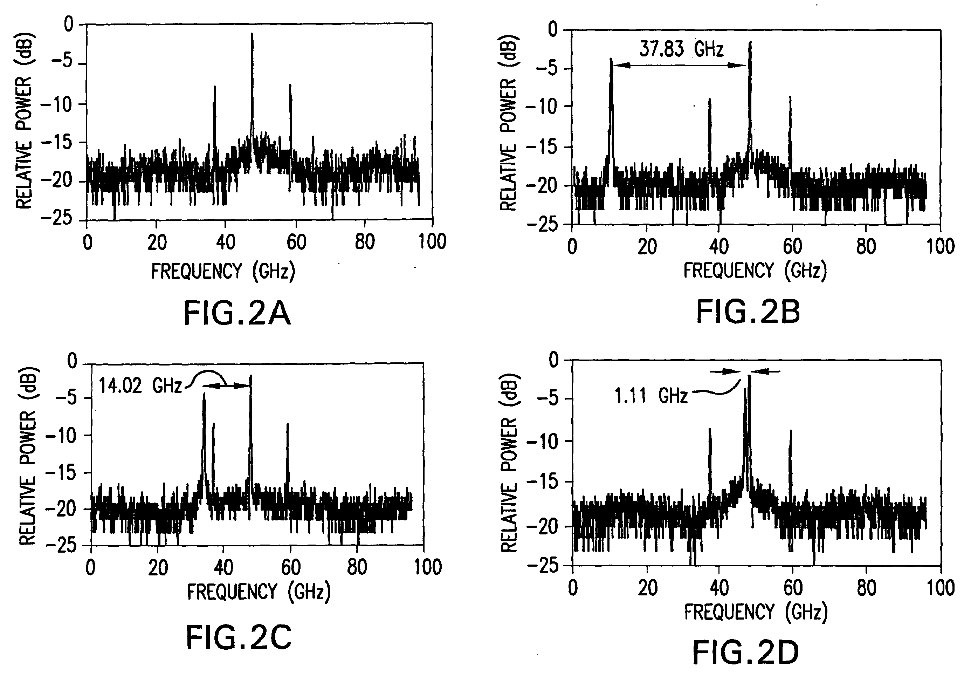

Turning now to Figs. 2A-2D, where the measured optical spectrum of a RZ modulated signal using the heterodyne detection device and method of Fig. 1 is shown. Each optical spectrum represents a different condition. For example, Fig. 2A represents an RZ signal that is modulated with 2^31 PRBS at an 11 Gb/s rate, and has a carrier-to-sideband ratio of about 7 dB. The remaining optical spectrums represent three additional conditions for testing wavelength accuracy by having neighboring CW tones at three different distances from the RZ signal. Fig. 2B shows a CW tone located at approximately 37.83 GHz, Fig. 2C shows a CW tone located at approximately 14.02 GHz and Fig. 2D shows a CW tone located at approximately 1.11 GHz, all from the center frequency of the RZ signal, respectively. In all three conditions, it is clear from the measured optical spectrums that the RZ signal is recoverable, despite the CW tones and their known effects of neighboring the RZ signal.

An appropriate low-pass filter 28 (25-50 MHz) may be used. Alternatively, one can use a New Focus O/E converter with a DC-125 MHz electrical bandwidth. While this non-optimal LPF reduces the wavelength measurement resolution, the interference tone is still spectrally resolved, appearing 1.11 GHz distance from the RZ carrier in Fig. 2(D).

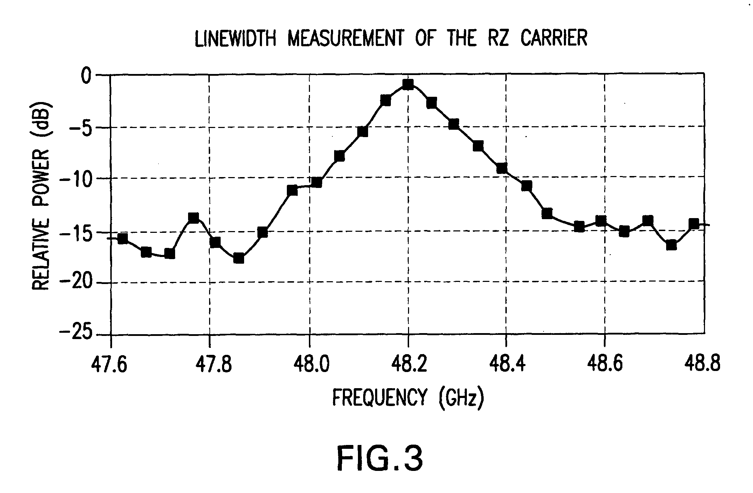

Fig. 3 shows an enlargement of the region around the RZ signal carrier. It illustrates the line-width broadening effect due to the insufficient resolution bandwidth. The measured line-width could be narrower if one uses a 50 MHz detector bandwidth. However, the center frequency of the RZ signal could still be estimated from the symmetric line shape of the measured data.

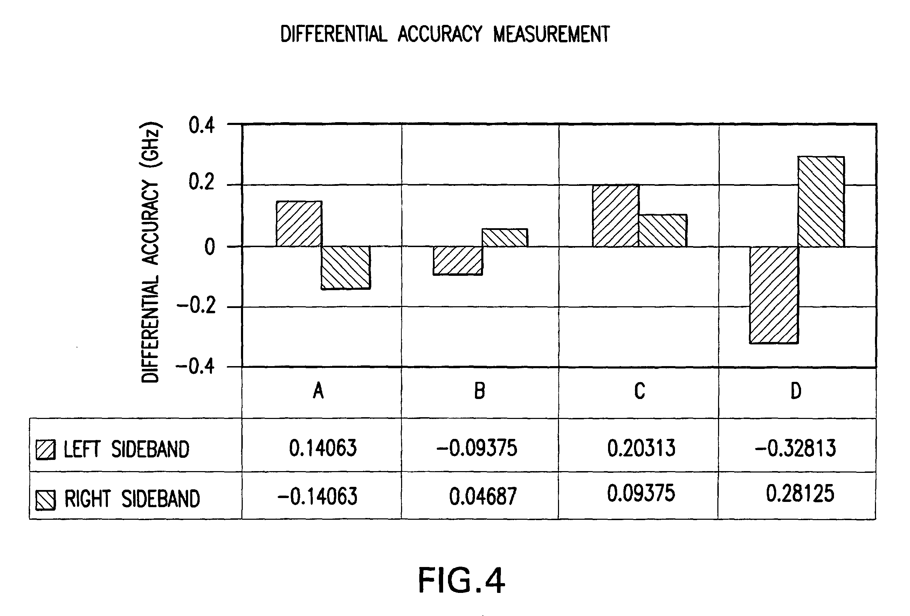

The differential accuracy is defined as the error in measuring the optical frequency difference between two signals. Because the optical frequency difference between the carrier and the RF sidebands of an RZ signal equals the RF clock frequency, a convenient approach to measuring the differential accuracy involves measuring the carrier to side band frequency difference. Fig. 4, for example, presents the measured differential accuracy obtained by evaluating the same RZ signal as in Fig. 3 in the presence of a CW interfering channel.

Fig. 4 shows the measured differential accuracy obtained by comparing the measured optical frequency difference between the RF sidebands and carrier with the RF clock frequency. In this particular example, the clock frequency is about 11 GHz. As can be seen from the data, the differential accuracy is about 0.1 GHz when the interfering CW tone is not present or is far away from the RZ signal (case A and B in Fig. 4).

When the CW tone is moved close to the left sideband of the RZ signal, the differential accuracy increases to 0.2 GHz (case C in Fig. 4). Finally, in case D, the distance between the CW tone and the RZ carrier is about 1 GHz. In this event, the differential accuracy degrades further to 0.3 GHz. The degradation of the differential accuracy by a close interfering channel is caused by the larger than desired detector bandwidth. By optimizing the detector bandwidth to 50 MHz, it is expected that uniform differential accuracy would result in the presence of any interfering tones.

In order to estimate the absolute accuracy of the heterodyne detection method herein described, the measured wavelength of a test tone is compared to that obtained from a Burleigh WA-7600 wavelength meter. The Burleigh WA-7600 wavelength meter has a specified 0.3 pm absolute and differential accuracy, and a +/- 0.2 ppm repeatability and is assumed to be well calibrated. The Burleigh WA-7600 has similar specifications to other commercially available wavelength meters. In each case, corresponding to the experimental conditions of Fig. 2 (A) to Fig. 2(C), one would repeatedly measure 20 times the center wavelength of the RZ signal using either technique.

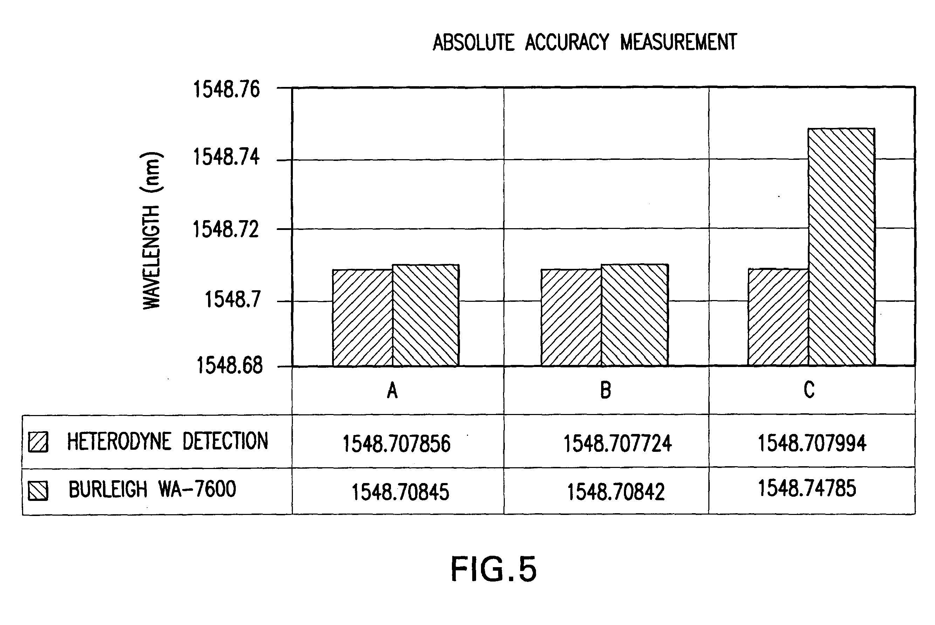

Fig. 5 shows a comparison of the average values of 20 measurements for each case (corresponding to Fig. 2 (A) to Fig. 2(C)). The heterodyne detection method is substantially insensitive to the neighboring interfering channel while the Burleigh wavelength meter is extremely sensitive. This result may be explained by the fact that the Burleigh interferometric technique is not capable of resolving tones that are spaced closer than about 30 pm.

Thus, the Burleigh absolute accuracy is compromised by the presence of nearby interfering tones. An accurate estimate of the absolute accuracy of the Burleigh may be obtained only by comparing the average values for case A and case B (corresponding to Fig. 2(A) to Fig. 2(B)) when tones are no closer than approximately 37 GHz. In these two cases, the Burleigh wavelength meter meets its design specification of 0.3 pm absolute accuracy.

In Fig. 5, the difference between the average value obtained with the heterodyne detection method and the Burleigh wavelength meter (when comparing only cases A and B) is about 0.7 pm. Considering the 0.3 pm absolute accuracy of the Burleigh meter itself, the absolute accuracy of the heterodyne detection is about 1 pm on average.

Among the advantages of certain aspects of the present invention, a wavelength monitor scheme based on heterodyne detection with a real-time externally calibrated tunable laser provides for more accurate monitoring of optical signals, especially where channel spacing is less than about 35 GHz. The method and apparatus combine the high wavelength resolution characteristics provided by heterodyne detection with the high wavelength accuracy provided by a real-time calibrated tunable laser (using a HCN gas reference cell).

Aspects of the present invention provide a wavelength resolution (assuming a LPF of about 50 MHz) that is substantially advantageous to most commercially available wavelength meters (3 GHz) while attaining 1 pm absolute accuracy. Another important advantage results from the technique's insensitivity to environmental factors, test channel polarization and spectral content. This technique may be useful for deployment in frequency control apparatus required for future upgrades in long haul undersea telecommunications network.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A system for detecting a wavelength of an input optical signal, said system comprising:
a local oscillator (16) for providing optical local oscillator signal on first (18) and second (20) paths,
a wavelength calibration device (14) coupled to said first path (18) for producing real-time clock pulses (22) corresponding to a wavelength of said local oscillator signal,
an optical signal coupler (24) for combining said local oscillator signal on said second path (20) with the input optical signal to provide a combined signal; and
a detection circuit (30) for receiving at least a portion of said combined signal and detecting the input optical signal using said clock pulses for data acquisition.

2. The system of claim 1, wherein said wavelength calibration device combines said local oscillator signal with a hydrogen cyanide (HCN) gas reference cell.

3. The system of claim 1, wherein edges of said clock pulses (22) correspond to wavelength increments of said local oscillator signal of between about 0.4 pm and 50 pm.

4. A method for detecting a wavelength of an input optical signal in an optical communication system, comprising:
providing a local oscillator signal, on first and second optical paths (18, 20);
coupling the local oscillator signal from the first path (18) into a wavelength calibration device (14) coupled for producing real-time clock pulses (22) corresponding to a wavelength of said local oscillator signal;
coupling the local oscillator signal from the second path (20) into an optical signal coupler (24) for combining said local oscillator signal on said second path with the input optical signal to provide a combined optical signal; and
detecting the input optical signal from said combined optical signal using said clock pulses for data acquisition.

5. The method of claim 4, said method further comprising depolarising said local oscillator signal on said second path (20) before said coupling step.

6. The system of claim 1, further comprising a balanced detector (30) coupled to an output of said coupler to cancel intensity modulation of the input signal.

7. The system of claim 1, further comprising a low pass filter coupled between said coupler and said detection circuit.

8. The system of claim 1, further comprising a polarization scrambler coupled to said second path between said local oscillator and said coupler for depolarising said local oscillator signal.

## Patentansprüche

1. System zum Detektieren einer Wellenlänge eines optischen Eingabesignals, wobei das System aufweist:
einen lokalen Oszillator (16) zum Bereitstellen eines optischen Lokaloszillatorsignals an ersten (18) und zweiten (20) Pfaden,
eine Wellenlängenkalibrierungsvorrichtung (14), die gekoppelt ist mit dem ersten Pfad (18) zum Erzeugen von Echtzeittaktpulsen (22), korrespondierend mit einer Wellenlänge des lokalen Oszillatorsignals,
einen optischen Signalkoppler (24) zum Kombinieren des lokalen Oszillatorsignals am zweiten Pfad (20) mit dem optischen Eingabesignal, um ein kombiniertes Signal bereitzustellen; und
einen Detektionsschaltkreis (30) zum Empfangen von wenigstens einem Teil des kombinierten Signals und Detektieren des optischen Eingabesignals unter Verwendung der Taktpulse für die Datenakquisition.

2. System nach Anspruch 1, wobei die Wellenlängenkalibrierungsvorrichtung das lokale Oszillatorsignal kombiniert mit einer Wasserstoffcyanid(HCN)-Gasreferenzzelle.

3. System nach Anspruch 1, wobei Kanten der Taktpulse (22) korrespondieren mit Wellenlängeninkrementen des lokalen Oszillatorsignals zwischen ungefähr 0,4 pm und 50 pm.

4. Verfahren zum Detektieren einer Wellenlänge eines optischen Eingabesignals in einem optischen Kommunikationssystem, aufweisend:
das Bereitstellen eines lokalen Oszillatorsignals an ersten und zweiten optischen Pfaden (18,20);
das Koppeln des lokalen Oszillatorsignals vom ersten Pfad (18) in eine Wellenlängenkalibrierungsvorrichtung (14), gekoppelt zum Erzeugen von Echtzeittaktpulsen (22), korrespondierend mit einer Wellenlänge des lokalen Oszillatorsignals;
das Koppeln des lokalen Oszillatorsignals vom zweiten Pfad (20) in einen optischen Signalkoppler (24) zum Kombinieren des lokalen Oszillatorsignals am zweiten Pfad mit dem optischen Eingabesignal, um ein kombiniertes optisches Signal bereitzustellen; und
das Detektieren des optischen Eingabesignals vom kombinierten optischen Signal unter Verwendung der Taktpulse für die Datenakquisition.

5. Verfahren nach Anspruch 4, wobei das Verfahren weiterhin aufweist das Depolarisieren des lokalen Oszillatorsignals am zweiten Pfad (20) vor dem Kopplungsschritt.

6. System nach Anspruch 1, weiterhin aufweisend einen symmetrischen/Gegentakt-Detektor (30), der gekoppelt ist mit einer Ausgabe des Kopplers, um eine Intensitätsmodulation des Eingabesignals zu canceln.

7. System nach Anspruch 1, weiterhin aufweisend einen Tiefpaßfilter, der gekoppelt ist zwischen dem Koppler und dem Detektionsschaltkreis.

8. System nach Anspruch 1, weiterhin aufweisend einen Polarisationsverwürfler, der gekoppelt ist mit dem zweiten Pfad zwischen dem lokalen Oszillator und dem Koppler zum Depolarisieren des lokalen Oszillatorsignals.

## Revendications

1. Système pour détecter une longueur d'onde d'un signal optique d'entrée, le système comprenant :
un oscillateur (16) local pour fournir un signal optique d'oscillateur local sur des premier (18) et deuxième (20) chemins de transmission de signaux,
un dispositif (14) d'étalonnage de longueur d'onde couplé au premier chemin (18) pour produire des impulsions (22) d'horloge en temps réel correspondant à une longueur d'onde du signal d'oscillateur local,
un coupleur (24) de signaux optiques pour combiner le signal d'oscillateur local sur le deuxième chemin (20) et le signal optique d'entrée pour fournir un signal combiné ; et
un circuit (30) de détection pour recevoir au moins une partie du signal combiné et détecter le signal optique d'entrée en utilisant les impulsions d'horloge pour l'acquisition des données.

2. Système selon la revendication 1, dans lequel le dispositif d'étalonnage de longueur d'onde combine le signal d'oscillateur local et une pile à gaz de référence à base d'acide cyanhydrique (HCN).

3. Système selon la revendication 1, dans lequel les fronts des impulsions (22) d'horloge correspondent aux incréments de longueur d'onde du signal d'oscillateur local compris entre 0,4 pm et 50 pm environ.

4. Procédé pour détecter une longueur d'onde d'un signal optique d'entrée dans un système de télécommunication par fibre optique, comprenant :
la fourniture d'un signal d'oscillateur local, sur des premier et deuxième chemins (18, 20) optiques ;
le couplage du signal d'oscillateur local depuis le premier chemin (18) dans un dispositif (14) d'étalonnage de longueur d'onde couplé pour produire des impulsions (22) d'horloge en temps réel correspondant à une longueur d'onde du signal d'oscillateur local ;
le couplage du signal d'oscillateur local depuis le deuxième chemin (20) dans un coupleur (24) de signaux optiques pour combiner le signal d'oscillateur local sur le deuxième chemin et le signal optique d'entrée pour fournir un signal optique combiné ; et
la détection du signal optique d'entrée à partir du signal optique combiné en utilisant les impulsions d'horloge pour l'acquisition des données.

5. Procédé selon la revendication 4, le procédé comprenant en outre la dépolarisation du signal d'oscillateur local sur le deuxième chemin (20) avant l'étape de couplage.

6. Système selon la revendication 1, comprenant en outre un détecteur (30) équilibré couplé à une sortie du coupleur pour annuler une modulation d'intensité du signal d'entrée.

7. Système selon la revendication 1, comprenant en outre un filtre passe-bas couplé entre le coupleur et le circuit de détection.

8. Système selon la revendication 1, comprenant en outre un embrouilleur de polarisation couplé au deuxième chemin entre l'oscillateur local et le coupleur pour dépolariser le signal d'oscillateur local.
